# EUROPEAN PATENT APPLICATION

(11) **EP 1 059 598 A2**
(43) Date of publication of application: **13.12.2000**
(21) Application number: 00304839.4
(22) Date of filing: 07.06.2000
(51) Int. Cl.: G06F 17/60, G06F 17/22

(54) **Web-based document exchange**

(30) Priority: 11.06.1999 US 330926
(71) Applicant: Solectron Corporation, Milpitas, CA 95035 (US)
(72) Inventor: Ouchi, Norman Ken, San Jose, California 95120 (US); Shioya, Kunitaka, San Jose, California 95129 (US)
(74) Representative: Allman, Peter John

(57) **Abstract**

The present invention relates to document exchange on the World Wide Web, and in particular to a Web-based system for transmitting organized data files stored on computer networks. A user employs a Web browser to request a classification web server provide a classification web page of classification fields to organize the data. For each classification, the user accesses a computer network and copies the file to the classification web page, and sends the classification web page to the classification web server.

## Description

### Background:

The present invention relates to document exchange on the World Wide Web, and in particular to a Web-based system and method for transmitting organized data files kept in storage devices on computer networks.

Manufacturers of products and service providers would benefit by better integration of document exchange with others on computer networks, especially when customers provide product or service descriptions in different data file formats. Much of the descriptions are now in electronic form because computers generate the drawings, specifications, and parts lists, etc. However, in many organizations, the documents are generated and controlled by different departments, geographically dispersed, and not well coordinated.

Further, methods relying on direct program-to-program interaction between companies have not worked well, because they depend on a uniformity of processing that does not exist. Businesses have attempted to exchange standardized documents: purchase orders, parts lists, drawings, and specifications, but many product descriptions are not standardized. Some examples are computer aided design (CAD) or electronic design automation (EDA) software which have many proprietary file formats. Assembly instructions are also not standardized and differ for each company.

It would be desirable to have a system to classify nonstandard documents for transmission to facilitate automated processing of these documents when received.

Background for the environment of the invention is discussed in Andrew Tannebaum, Computer Networks third edition (1996) which is hereby incorporated by reference.

In an attempt to address these problems, one manufacturer developed a system to aid in organization and transfer of product description data. Using this system users accessed servers, selected data files, and collected the data files associated with a particular product. The sending user was required to create a text file that described each attached file. The files were compressed, encrypted, and sent to the receiving location. The receiving location decrypted and decompressed the files. The text files were read and the receiving user processed or stored files based on this information.

The system had certain deficiencies. For example, the user at the receiving location had to read the text files so they could be classified into either engineering drawings, specifications, parts lists; etc. An automated system based on the descriptive text file was developed but inconsistent classification by senders rendered it ineffective. The sender had to remember to e-mail or phone to notify the receivers that the data files were sent. This system was limited to Microsoft Windows and NT operating systems, and did not support UNIX systems and Apple systems. While the Internet was used for data transfer, the file transfer protocol (FTP) was used. Most computer users do not use FTP regularly, so information system support was need to guide the typical users through the process.

Another approach is to attach the data files to an e-mail message. Many e-mail systems support attachment of files by permitting the user to access the computer network and selecting files to be sent with the e-mail message to the e-mail recipient. It has the advantage in that a separate e-mail message for notification is not required. However, attachment to e-mail messages does not classify the files to facilitate processing at the receiving system. Additional classification information such as the descriptive text is needed. Also, some e-mail systems limit the size of the attachments in terms of bandwidth and the storage availability and the like since e-mail systems are designed for rapid access to a large number of small messages and large files consume valuable message storage space.

Although HTML (shorthand for Hypertext Mark-up Language) has been very successful as an electronic-publishing language on the World Wide Web (WWW), it is primarily concerned with how a Web browser should arrange text and images of a Web page. It does not concern itself nearly as much with identifying the information. HTML 2.0 and HTML 3.0 provide Web pages which can be formatted as forms with boxes or buttons that allow users to fill in information or make selections and then return the completed form to server of that Web page. HTML Forms described on pages 691-706 of Tannebaum's Computer Networks work in many cases for electronic commerce because they do not require the parties know each other's internal procedures.

More recently, the World Wide Web Consortium (WC3) completed the Extensible Markup Language (XML) which is designed for document exchange on the Web. XML has advantages over HTML because it self-identifies the document sent. However, this new language's ability to address document exchange will take time while programmers write the code. For additional details see Scientific American (May 1999), pages 89-93, www.sciam.com/1999/0599issue/0599bosak.html and www.wc3.org, which together are hereby incorporated by reference.

What would be desirable is a Web-based system easy for the user to assimilate that has the capability of selecting documents, files, from a client or server on a computer network, can classify the files, and can transmit these files. The receiving location could easily process these files since they had been classified by the originating location. In addition, it would be desirable if the system supported most operating systems, and provided notification when the files are sent. Simply stated, it would be helpful if a system existed that easily supported Web-based exchange of product and service description information from company to company using only browser technology.

### Summary of the Invention:

The present invention provides systems and methods which run on the World Wide Web. Upon request from an user, a classification web server provides a classification web page written in, for example, the standardized generalized markup language (SGML), XML, Sun Java, Microsoft Active X, and/or a HTML form containing classification fields to organize data. The user employs a Web browser to request the classification web page from the classification web server, process the classification web page, and generate a user interface with classifications, to select one or more files for each classification, and to send the classification web page back to the classification web server. For each classification, the user accesses a computer network and copies data file(s) stored in a storage device into the classification web page. When the user has copied all of the desired files, the user sends the classification web page back to the classification web server. The classification web server receives the classification web page with the data file(s) and processes the files based on the classifications.

### Brief Description of the Drawings:

Figure 1 illustrates an example of the classification web page.
Figure 2 illustrates using the classification web page to send data file(s) to the classification web server and the flow of information from the classification web server to a data storage device.
Figure 3 illustrates a method of organizing data files from the end user perspective.
Figure 4 illustrates an example of a file status web page.

### Description of the Preferred Embodiments:

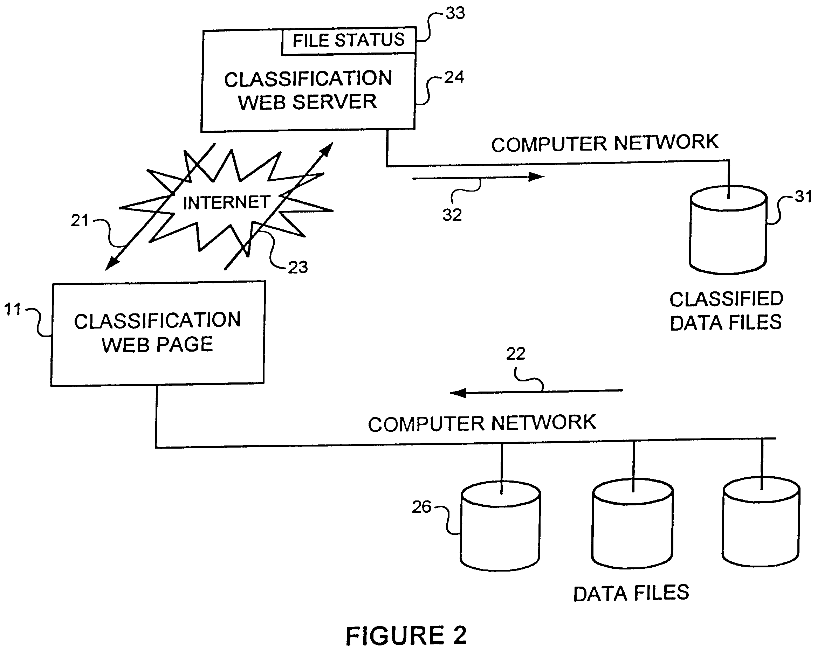

As shown in Figure 2, the system includes a classification web server 24 running on preferably an Intel Pentium, AMD or Sun computer capable of running commercial client-server software such as Microsoft Internet Information Server or Netscape Webserver or IBM eCommerce Server or the like. A manufacturer or a service provider can access the classification web server 24 in a known manner through a local area network (LAN) or a wide area network (WAN).

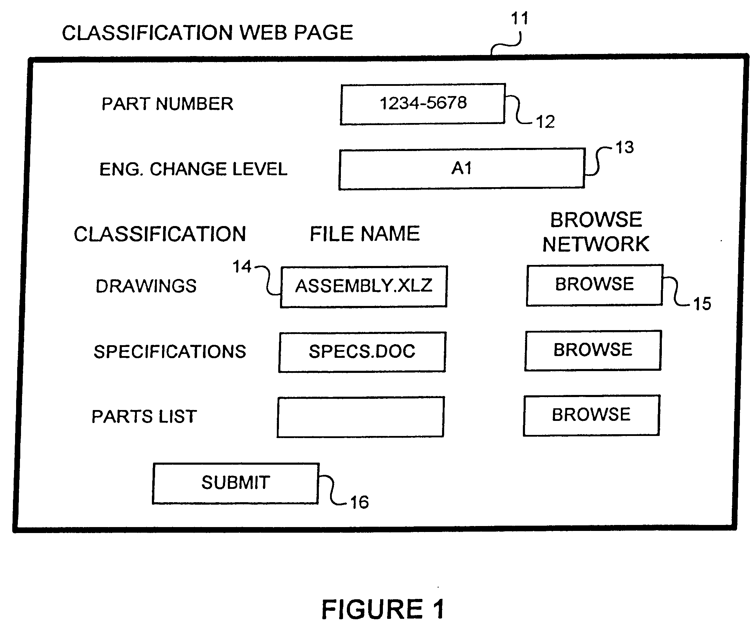

The classification web page 11 shown in Figures 1 and 2 is a program written in SGML, XML, HTML, Java, Microsoft Active X, or an Internet web browser executable language. As is known, the classification web page 11 can be written using a combination of these languages. As shown in the Figure 1, in one embodiment, the classification web page 11 has a user entry field for a part number 12 and an engineering change level 13 which together function to identify the product to be associated with the data files.

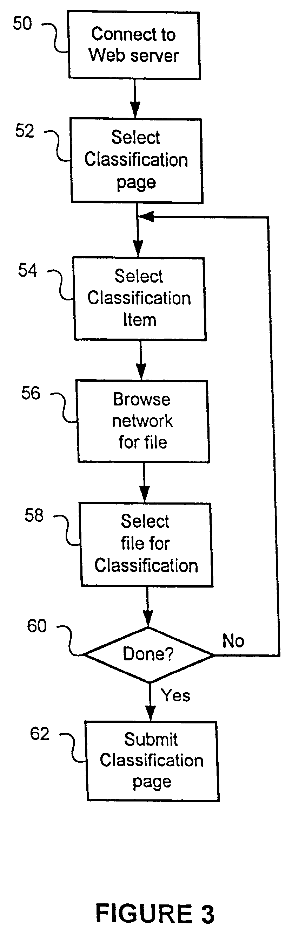

To begin the user operates a modem of a PC or Mac to connect to the Internet and employs Microsoft Internet Explorer, Netscape Navigator browser or the like to connect to the classification web server 24 shown in Figure 2. Figure 3 calls this step 50. The user downloads the classification web page 11 shown in Figure 2 into memory, e.g., RAM of his or her computer. Figure 3 calls this step 52.

Referring to Figures 1-3, we will now describe one example where the present invention can be used to classify data files used to manufacture a product. Of course, the same type of operation could be used to provide a service to a user. For each classification item (e.g., drawings, specification, and parts list) selected in step 54, the user pushes a browse button 15 to invoke a network browser program written as a Java applet or Active X object or other web browser executable language to navigate/browse the network for data file(s) in step 56. In step 58, the user selects and copies the data file(s) 22 from storage device(s) 26 of the computer network into the classification web page 11.

Terminology mentioned in the specification but not uniquely defined should be understood by reference to Microsoft Press', Computer Dictionary (1994, Second Edition, or 1997, Third Edition). Another reference is Norton, Complete Guide to Windows NT Workstation 4 (1999). These references are hereby incorporated by reference in their entireties. Each storage device 26 can be a hard disk drive, read-write CD-ROM, tape, RAM, ROM, flash, or any other known computer accessible memory. Sun Java and Microsoft Active X programming languages have controls (i.e., program code) that can be used. By user selection the name of the data file, e.g., ASSEMBLY.XLZ, appears in the file name field 14. After selecting all of the data file(s) associated with the particular product, the decision block 60 indicates yes which in one embodiment activates the submit button 16. In step 62, the user pushes the submit button 16 and the classification web page 11 with all of the data files is sent on Internet route 23 to the classification web server 24.

As shown in Figure 2, the classification web server 24 extracts the data files from the classification web page 11 and stores the classified data files 32 on storage device(s) 31 of the type discussed earlier and attached to classification web server 24. The classification information is used to organize the data on storage device(s) 31 or process the data based on the classification.

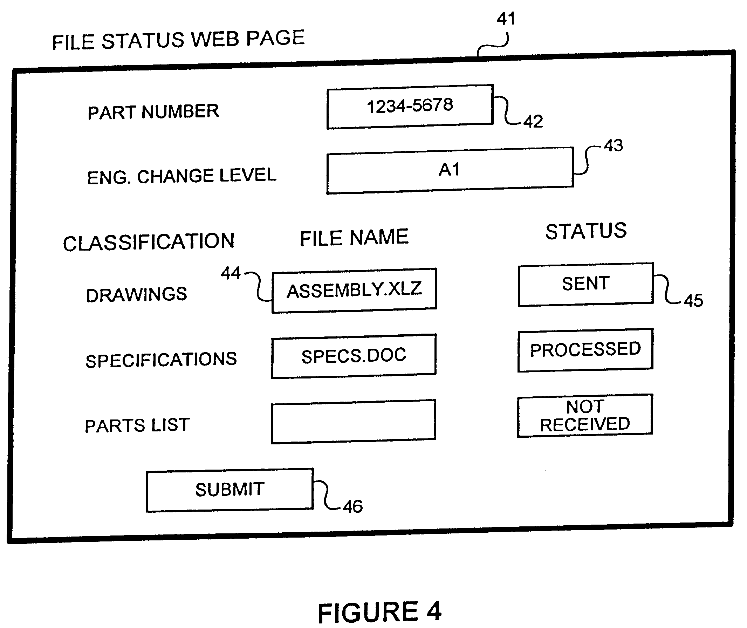

As shown in Figure 4, in a preferred embodiment the present invention provides a file status web page 41 written in the language(s) described earlier in connection with the web classification page 11. The set of files in a classification web page are associated with a document identifier such as the part number and engineering change level. The classification web server 24 includes a file status table 33 that tracks information on the data files associated with a document identifier that were received and those data files still to be sent. Files can be automatically processed based on the classification. The processing may require that one or more steps be executed, where each step can be defined as a process state. Other information such as the process state are also kept in the status table. The remote users may request a file status 41 web page by entering the document identifier, in this example, part number, e.g., 1234-5678, in part number field 42 and the engineering change level, e.g., A1, in engineering change level field 43 and uses the submit button 46 to send the request to the classification web server 24. The status of data files 44 (e.g., sent, processed, or not received) associated with part number and engineering change level are returned in status field 45. The classification web server 24 can be integrated with an e-mail system such as Microsoft Outlook 98 or IBM Lotus Notes using industry standard interfaces such as MAPI, Mail Application Programming Interface. Using the e-mail system, a list of e-mail addresses called a distribution list can be created so that specific e-mail users can be notified when files have been sent to the classification web server 24. The classification web server 24 can send an e-mail to the distribution list using the MAPI when a file is received.

The classification web server 24 can be integrated with a workflow system. Preferred embodiments of e-mail based workflow systems are described in U.S. Application No.08/901,539, entitled, Workflow Systems and Methods, which the U.S. Patent Office allowed on February 16, 1999, which is hereby incorporated by reference. Using the workflow system, a workflow can be generated to process files when they are received by the classification web server 24. The classification web server 24 can start a workflow using the MAPI when a file is received.

## Claims

1. A system for transmitting a classified file, comprising:
a classification web page adapted for storage on a server,
means for sending the classification web page to a web browser upon request;
means for selecting and copying a file from a computer network to the classification web page; and
means for sending the classification web page back to the server

2. The system of claim 1, wherein the classification web page includes a document identifier.

3. The system of claim 2, further comprising means for tracking the status of the file based on the document identifier.

4. The system of claim 2, further comprising means for requesting a display of the status of the file based on the document identifier.

5. The system of claim 1, further comprising means for sending e-mail to a list of e-mail addresses when a classification web page is received by the server.

6. The system of claim 1, further comprising means for initiating a workflow when a classification web page is received by the server.

7. The system of claim 1, further comprising means for storing or processing the file based on the data classification.

8. A system for transmitting a classified file to a server, comprising:
a classification web page containing:
a file classification field,
a program to select and copy a file from a computer network to the classification web page,
a submit program to send the classification web page to the server;
and adapted to be sent to a web browser upon request

9. The system of claim 8, wherein the classification web page includes a document identifier field.

10. The system of claim 9, wherein the system tracks the status of the file based on the document identifier.

11. The system of claim 9, further comprising a web page for displaying the status of the file based on document identifier.

12. The system of claim 8, further comprising an e-mail system which sends e-mail to a list of e-mail addresses when a classification web page is received by the server.

13. The system of claim 8, further comprising a workflow system initiating a workflow when a classification web page is received by the server.

14. The system of claim 8, further comprising a data base, wherein the file is processed or stored in the data base based on the classification field.

15. A Web-based system for transmitting a classified file wherein the system is connected to the World Wide Web, WWW, comprising:
a classification web page containing:
a data classification field,
a file selection and transfer program to copy a file from a computer network to the classification web page,
a submit button to activate a program to send the classification web page with the file to the server
wherein the web page is adapted to be stored on a server and sent on request to a web browser.

16. The system of claim 15, wherein the classification web page includes a document identifier field.

17. The system of claim 16, further comprising a file status table with a data identifier and the status of the file.

18. The system of claim 16, further comprising a web page with a user settable field for requesting data from file status table.

19. The system of claim 15, further comprising an e-mail system, including a list of e-mail addresses, and the system sends an e-mail to the list when the classification web page is received by the server.

20. The system of claim 15, further comprising a workflow system initiating a workflow when a classification web page is received by the server.

21. The system of claim 15, further comprising a data base having data files which are processed or stored in the data base using the data classification.

22. A method of transmitting a classified file, comprising:
providing a classification web page adapted for storage on a server;
sending the classification web page to a web browser upon request;
selecting and copying a file from a computer network to the classification web page; and
sending the classification web page back to the server
